# EUROPEAN PATENT SPECIFICATION

(11) **EP 0 656 612 B1**
(45) Date of publication and mention of the grant of the patent: **09.02.2000**
(21) Application number: 94118534.0
(22) Date of filing: 25.11.1994
(51) Int. Cl.: G08C 17/00

(54) **Method and apparatus for wireless remote control**
Drahtlosen Fernsteuerung, Verfahren und Vorrichtung
Méthode et appareil de télécommande sans fil

(30) Priority: 03.12.1993 FI 935419
(43) Date of publication of application: 07.06.1995
(73) Proprietor: Oy Helvar, 00380 Helsinki (FI)
(72) Inventor: Viljanen, Teijo, SF-02700 Kainiainen (FI)
(74) Representative: Hoffmeister, Helmut, Dr. Dipl.-Phys.

(56) References cited:
- EP-A- 0 361 881
- US-A- 4 412 355
- US-A- 4 471 353
- PATENT ABSTRACTS OF JAPAN vol. 13, no. 226 (E-763) 25 May 1989 & JP-A-01 034 173 (SAKIO YONEDA) 3 February 1989
- PATENT ABSTRACTS OF JAPAN vol. 7, no. 17 (E-154) 22 January 1983 & JP-A-57 174 950 (MITSUBISHI DENKI KK) 27 October 1982

## Description

The invention relates to a method and an apparatus for wireless remote control, wherein the electric power required by a transmitter supplying a control signal in a wireless manner to a remote controlled apparatus is produced by means of a generator provided with an operating element which is operated by the action of physical force from the operator.

Us 4 471 353 discloses a push-button operated electrical power source for a wireless remote control which is operated by physical force of the operator. The generated current is sufficient to operate an infrared pulse-coded optical transmitter for a short time period during which a preset signal is sent to a remote receiver. Because enough energy is produced while operating the switch there is no additional power source like an accumulator or a battery needed.

It is a drawback of the known apparatus that the operator is merely able to start and stop the transmitter and to start and stop thereby the remote device receiving preprogrammed data from the transmitter. Except of switching to the binary states 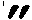 on" and 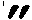 off" the operator has no additional influence on the data sent by the transmitter. Particularly he is not able to determine the speed, direction or extent of the function of the receiving unit with the push-button switch. The operator has to select the desired function by turning a selector wheel first and afterwards he has to activate the transmitter by pushing the button. Functions which require a quick reaction of the operator can not be controlled by the known apparatus because the necessary series of steps of selecting and transmitting data take too much time.

In the invention, these problems have been solved by fitting a control-signal transmitter with a manually operated mini-generator for producing necessary electrical energy for transmitting a control signal. The characterizing features of the invention are set forth in the appended claims.

The invention can be applied for example in the control and/or regulation of lights. When studying the application of the invention, it was observed that the energy required for turning the knob or pressing the button of a normal light regulator is well sufficient for producing e.g. an infrared transmission. Therefore, it is possible to design a remote control transmitter which resembles a normal minicontroller and also feels that way in handling but can be installed freely without wires almost anywhere.

The invention will now be described in more detail with reference made to the accompanying drawings, in which
- fig. 1: shows schematically a design according to one embodiment of the invention and
- fig. 2: shows schematically a design according to a second embodiment of the invention.

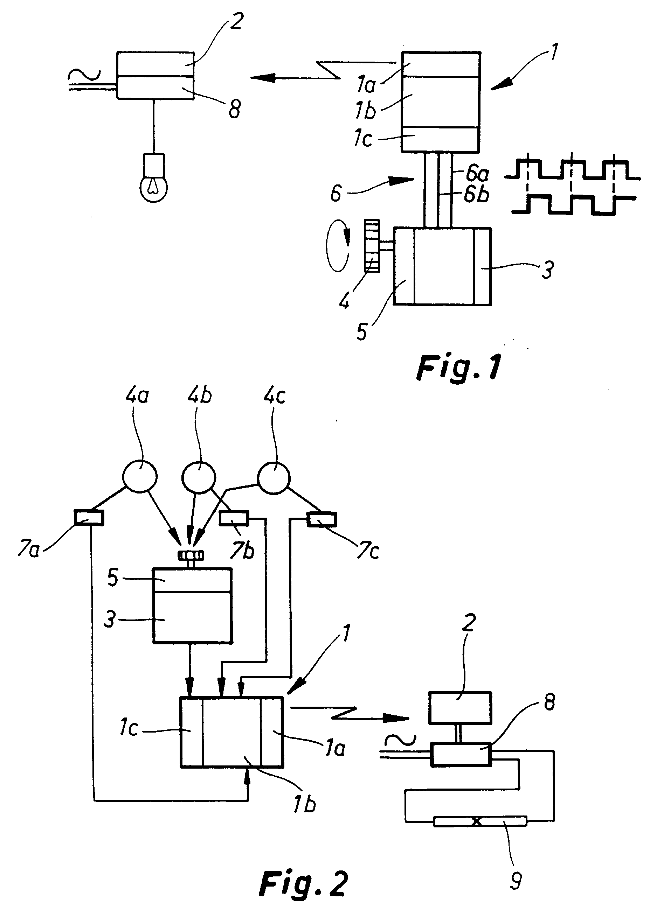

In the example of fig. 1 , the apparatus includes a generator 3 which can be rotated from an operating knob 4 through the intermediary of a gear S. The electric power produced by the generator 3 is delivered by wires 6 to a transmitter 1 which includes a voltage regulator 1c, a microprocessor 1b and transmitter diodes 1a. The microprocessor 1b is used for encoding a control signal to be transmitted e.g. with an IR-protocol. Naturally, it is also possible to use a signal transmitted by radio waves or ultrasound. The control signal is received by a conventional remote control receiver 2 associated e.g. with a light controller 8.

The generator 3 may comprise e.g. a stepping motor provided with two windings, the pulses supplied by the different windings thereof in conductors 6a and 6b being in phase shift with each other. Thus, the selection of rotating direction for the generator 3 can be used for setting the control direction up or down. The extent and/or speed of rotation of the operating knob 4 can be further used for influencing the rate or degree of a function to be controlled. Thus, in the illustrated example the lights can be switched on and off and, in addition, the level of illumination can be regulated.

The exemplary embodiment of fig. 2 differs from the above in that the turning knob 4 has been replaced by a plurality of press buttons 4a, 4b, 4c. Upon pressing each press button, the generator 3 supplies energy to the transmitter 1. In addition, the press buttons are provided with micro-switches 7a, 7b, 7c for producing various control commands to a micro-processor 1b. For example, the micro-switch 7a issues an up-command and the micro-switch 7b a down-command. The micro-switch 7c may re-establish some preset condition. The receiver 2 controls a light regulator associated e.g. with an electronic ballast 8. Hence, a lamp 9 can be switched on and off by means of a remote controller which is also capable of controlling the level of illumination up and down or selecting a predetermined level of illumination. Also in this case, the different rotating directions of the generator 3 can be used for producing different commands, e.g. up and down, whereby the micro-switches 7a and 7b are not necessary unless further information is required e.g. on the basis of the number of pressing times applied to the same knob.

Said degree of control can be calculated directly from pulses supplied by the generator 3.

In several practical applications it is preferred that the transmitter 1 and generator 3 provide a hand-held control unit.

Naturally, the invention is not limited by the above exemplary embodiments but the design and operation may vary in may ways within the scope of the appended claims. For example, the inductively operating generator can be replaced by a piezoelectrically or triboelectrically operating generator, although in the majority of applications an inductive generator may be the most preferred. The essential feature in the invention is that a transmitter with no batteries receives its operating power from a generator which produces electrical energy upon turning or pressing an operating element in a physical manner, e.g. manually, by the operator.

## Claims

1. A method for wireless remote control, wherein the electric power required by a transmitter (1) supplying a control signal in a wireless manner to a remote controlled apparatus (2) is produced by means of a generator (3) provided with an operating element (4) which is operated by the action of physical force from the operator,
**characterized in** that the direction and amount of control is effected by means of the same operating element (4) as the one used for operating the generator (3).

2. A method as set forth in claim 1, characterized in that the electric power is produced by means of a piezo- or triboelectrical generator.

3. A method as set forth in claim 1 or 2, characterized in that the generator (3) is operated by turning the operating element (4) and the selection of rotating direction is used for selecting various control commands.

4. A method as set forth in any of claims 1 to 3, characterized in that the extent and/or speed of turning the operating element (4) is used for influencing the rate or degree of a function to be controlled.

5. A method as set forth in claim 1, characterized in that the generator (3) is operated by pressing an operating element (4a, 4b, 4c) and the selection of a press button (4a, 4b, 4c) is used for selecting various control commands.

6. A method as set forth in claim 5, characterized in that various control commands are produced by means of micro-switches (7a, 7b, 7c) associated with said various press buttons (4a, 4b, 4c) operating the generator (3).

7. An apparatus for wireless remote control, wherein the power source for a control signal transmitter (1) comprises a generator (3) which produces electric energy upon turning or pressing an operating element (4),
**characterized in** that the generator (3) comprises a stepping motor provided with two windings and rotatable in both directions, the selection of rotating direction determining whether the control direction is up or down.

8. An apparatus as set forth in claim 7, **characterized in** that the operating element for the generator (3) comprises a turning knob (4) or at least one press button (4a, 4b, 4c).

9. An apparatus as set forth in any of claims 7 to 8, **characterized in** that the operating element for the generator (3) comprises a plurality of press buttons (4a, 4b, 4c) which are provided with micro-switches (7a, 7b, 7c) for producing various control commands.

10. An apparatus as set forth in claim 9, characterized in that the transmitter (1 ) and generator (3) provide a hand-held control unit.

11. An apparatus as set forth in any of claims 9 to 10. characterized in that there is a gear (5) between the generator (3) and the operating element (4).

## Patentansprüche

1. Verfahren zur drahtlosen Fernsteuerung, wobei die elektrische Energie, die von einem, ein Steuersignal an eine ferngesteuerte Vorrichtung drahtlos übermittelnden Sender benötigt wird, mittels eines Generators (3) erzeugt wird, welcher mit einem Bedienelement (4) versehen ist, das durch Einwirkung körperlicher Kraft des Bedieners betrieben wird,
dadurch gekennzeichnet, dass die Richtung und die Höhe der Steuerung mittels desselben Bedienelementes (4) bewirkt wird, welches zum Betreiben des Generators (3) benutzt wird.

2. Verfahren nach Anspruch 1, dadurch gekennzeichnet, dass die elektrische Energie mit einem piezoelektrischen oder einem triboelektrischen Generator erzeugt wird.

3. Verfahren nach Anspruch 1 oder 2, dadurch gekennzeichnet, dass der Generator (3) durch Drehen des Bedienelements (4) betrieben wird und die Wahl der Drehrichtung zur Auswahl verschiedener Steuerungssignale verwendet wird.

4. Verfahren nach einem der Ansprüche 1 bis 3, dadurch gekennzeichnet, dass der Umfang und/oder die Geschwindigkeit der Drehung der Bedienelements (4) zur Beeinflussung des Betrags oder des Grades einer zu steuernden Funktion benutzt wird.

5. Verfahren nach Anspruch 1, dadurch gekennzeichnet, dass der Generator (3) durch Drücken einen Bedienelements (4a, 4b, 4c) betrieben wird und die Wahl eines Drucktasters (4a, 4b, 4c) zur Auswahl verschiedener Steuerbefehle verwendet wird.

6. Verfahren nach Anspruch 5, dadurch gekennzeichnet, dass verschiedene Steuerbefehle durch Mikroschalter erzeugt werden, die mit den Druckknöpfen (4a, 4b, 4c) verbunden sind, welche den Generator (3) antreiben.

7. Vorrichtung zur drahtlosen Fernsteuerung, wobei die Energiequelle für einen Steuersignalsender (1) einen Generator (3) umfasst, der beim Drücken oder Drehen eines Bedienelements (4) elektrische Energie erzeugt,
dadurch gekennzeichnet, dass der Generator (3) einen Schrittmotor umfasst, der zwei Wicklungen aufweist und der in beiden Richtungen drehbar ist, wobei durch die Wahl der Drehrichtung zu bestimmen ist, ob die Steuerungsrichtung "AUF" oder "AB" ist.

8. Vorrichtung nach Anspruch 7, dadurch gekennzeichnet, dass das Bedienelement für den Generator (3) einen Drehknopf (4) oder wenigstens einen Drucktaster (4a, 4b, 4c) umfasst.

9. Vorrichtung nach einem der Ansprüche 7 oder 8, dadurch gekennzeichnet, dass das Bedienelement für den Generator (3) einen Vielzahl von Druckknöpfen (4a, 4b, 4c) umfasst, die Mikroschalter (7a, 7b, 7c) zur Erzeugung verschiedener Steuerbefehle aufweisen.

10. Vorrichtung nach Anspruch 9, dadurch gekennzeichnet, dass der Sender (1) und der Generator (3) eine in der Hand tragbare Steuerungseinheit bilden.

11. Vorrichtung nach einem der Ansprüche 9 oder 10, dadurch gekennzeichnet, dass ein Getriebe (5) zwischen dem Generator (3) und dem Bedienelement (4) angeordnet ist.

## Revendications

1. Procédé de télécommande sans fil dans lequel l'énergie électrique exigée par un transmetteur (1) qui envoie par voie sans fil un signal de commande à un appareil télécommandé (2) est produite au moyen d'un générateur (3) pourvu d'un élément (4) de mise en oeuvre qui est mis en oeuvre par l'effet d'une force physique de l'opérateur, caractérisé en ce que le sens et l'ampleur de la commande sont transmis au moyen du même élément (4) de mise en oeuvre que celui qui est utilisé pour mettre en oeuvre le générateur (3).

2. Procédé selon la revendication 1, caractérisé en ce que l'énergie électrique est produite au moyen d'un générateur piézo- ou triboélectrique.

3. Procédé selon la revendication 1 ou 2, caractérisé en ce que le générateur (3) est mis en oeuvre en tournant l'élément (4) de mise en oeuvre et la sélection du sens de rotation est utilisée pour sélectionner divers ordres de commande.

4. Procédé selon l'une quelconque des revendications 1 à 3, caractérisé en ce que l'ampleur et/ou la vitesse de rotation de l'élément (4) de mise en oeuvre est utilisée pour influencer le rapport ou niveau d'une fonction à commander.

5. Procédé selon la revendication 1, caractérisé en ce que le générateur (3) est mis en oeuvre en appuyant sur un élément (4a 4b, 4c) de mise en oeuvre et la sélection d'un bouton poussoir (4a, 4b, 4c) est utilisée pour sélectionner divers ordres de commande.

6. Procédé selon la revendication 5, caractérisé en ce que divers ordres de commande sont produits au moyen de microcommutateurs (7a, 7b, 7c) associés à divers boutons poussoirs (4a, 4b 4c) qui mettent en oeuvre le générateur (3).

7. Appareil de télécommande sans fil dans lequel la source d'énergie d'un émetteur (1) de signaux de commande comprend un générateur (3) qui produit de l'énergie électrique par rotation d'un élément (4) de mise en oeuvre ou par appui sur un tel élément, caractérisé en ce que le générateur (3) comprend un moteur pas à pas pourvu de deux enroulements et susceptible de tourner dans deux sens, la sélection du sens de rotation déterminant si le sens de commande est croissant ou décroissant.

8. Appareil selon la revendication 7, caractérisé en ce que l'élément de mise en oeuvre du générateur (3) comprend un bouton (4) à tourner ou au moins un bouton poussoir (4a, 4b, 4c).

9. Appareil selon l'une quelconque des revendications 7 et 8, caractérisé en ce que l'élément de mise en oeuvre pour le générateur (3) comprend une série de boutons poussoirs (4a, 4b, 4c) qui sont accompagnés de microcommutateurs (7a, 7b, 7c) pour produire divers ordres de commande.

10. Appareil selon la revendication 9, caractérisé en ce que le transmetteur (1) et le générateur (3) constituent une unité portative de commande.

11. Appareil selon l'une quelconque des revendications 9 et 10, caractérisé en ce qu'il existe un engrenage (5) entre le générateur (3) et l'élément (4) de mise en oeuvre.
